# EUROPÄISCHE PATENTSCHRIFT

(11) **EP 2 228 512 B1**
(45) Veröffentlichungstag und Bekanntmachung des Hinweises auf die Patenterteilung: **24.10.2012**
(21) Anmeldenummer: 09154629.1
(22) Anmeldetag: 09.03.2009
(51) Int. Cl.: E06B 9/04, E04B 1/61, F16B 5/00, E06B 3/70

(54) **Verfahren zur Bildung eines Verbundes von Profilbrettern**
Method for creating a composite from profile boards
Procédé de formation d'un composite de planches profilées

(43) Veröffentlichungstag der Anmeldung: 15.09.2010
(73) Patentinhaber: Fabricius Fastener GmbH, 33100 Paderborn (DE)
(72) Erfinder: Fabricius, Jürgen, 33102, Paderborn (DE)
(74) Vertreter: Hanewinkel, Lorenz

(56) Entgegenhaltungen:
- CA-A1- 1 002 724
- FR-A1- 2 866 054
- US-A- 6 058 672

## Beschreibung

Verfahren zur Bildung eines Verbundes von Profilbrettern mit einem Wulst und einer Nut an einer Seitenkante, die formschlüssig zueinander passen, und hinter der Nut ein angrenzender rechteckiger Hohlraum mit einer Hinterwand in definierter Tiefe vorhanden ist, in dem ein Vierkantprofil von oben bis unten eingesetzt ist, das eine hintere und vordere Innenwand besitzt.

Ein Verbund von Profilbrettern findet eine vielseitige Anwendung. Ein wesentlicher Einsatzfall ist die Herstellung von Klappläden vor Fenstern. Diese wurden traditionell aus Holzbrettern hergestellt und über aufgeschraubte Querleisten verbunden. In neuerer Zeit setzen sich aber immer mehr Profilbretter aus Kunststoff durch, die in Verbünden ohne zusätzliche Querleisten zu flachen Läden zusammengefügt werden.

Zur Herstellung der Verbünde werden bisher lange Schrauben eingesetzt, die von einer Seitenkante her durch die Profilbretter hindurch geschraubt werden und damit die Profilbretter zusammenziehen. Dies ist ein aufwendiges Verfahren führt bei nicht exakt eingedrehten Schrauben zu unschönen und unsauberen Verbiegungen in dem Verbund.

Ein weiteres Verfahren ist aus der Voranmeldung EP 08105115.3 bekannt, bei dem schräge Bolzen in die Wulst der Seitenkante der Profilbretter eingesetzt werden. In der Praxis hat sich jedoch gezeigt, dass sich bei Wärme der Verbund der Profilbretter stärker verziehen kann.

Zwei weitere Verfahren sind aus den Dokumenten US 6058672A - dem Oberbegriff des Anspruchs 1 entsprechend - und FRA 2866054 bekannt.

Es ist Aufgabe der Erfindung, ein Verfahren zur Bildung eines Verbundes von Profilbrettern anzugeben, dass eine saubere und einfache Montage erlaubt.

Diese Aufgabe wird durch die Merkmale des Anspruch 1 gelöst.

Ausführungsformen der Erfindung sind in den abhängigen Ansprüchen angegeben.

Das erfindungsgemäße Verfahren zur Bildung eines Verbundes aus Profilbrettern geht von Profilbrettern aus, die an ihren Seitenkanten jeweils einen Wulst und eine Nut aufweisen, die formschlüssig zueinander passen. Hinter der Nut grenzt ein rechteckiger Hohlraum an, der durch eine Hinterwand in einer definierten Tiefe abgeschlossen ist. In diesen Hohlraum ist formschlüssig ein Vierkantprofil aus Metall von oben bis unten eingesetzt, das eine hintere Innenwand besitzt, die der Seitenkante des Profilbrettes gegenüber liegt. und eine vordere Innenwand, die an die Seitenwand des Profilbrettes angrenzt, besitzt.
Zur Verbindung der Profilbretter werden nun in die Seitenkante und in die vordere Innenwand des Vierkantprofils unter einem Winkel Löcher gebohrt. Diese werden in einer Reihe in definierten Abständen so positioniert, dass die Löcher von zwei zusammenstoßenden Seitenkanten genau übereinanderliegen. So können in die Löcher Bolzen gesteckt werden, die so lang sind, dass sie nach dem Aufstecken eines nächsten Profilbrettes bis an die hintere Innenwand der beiden Vierkantprofile reichen.
Die Reihe von eingesteckten Bolzen verbindet die aneinanderliegenden Profilbretter sauber miteinander. Durch sie werden Verbiegungen zwischen den Profilbrettern verhindert.
Die Bolzen werden auch zur Befestigung der Profilbretter aneinander benutzt. Dazu wird in die Bolzen, die mit Querbohrungen versehen sind, je ein Befestigungsmittel längs der beiden angrenzenden Hohlräume von oben bis unten eingesetzt. Hierdurch wird ein Auseinanderziehen der Naht zwischen den Profilbrettern verhindert.

Ein günstiger Winkel für die Reihe von Löchern in den Seitenkanten beträgt 90°. Dadurch kann das nächste Profilbrett einfach auf die Reihe der eingesteckten Bolzen aufgesteckt werden und die Wülste gleiten in die entsprechenden Nuten.

Die Querbohrungen in den Bolzen, die sich an oberster und unterster Position in der Reihe der Löcher befinden, weisen vorteilhaft Gewinde auf, in die als Befestigungsmittel dazu passende Gewindestangen eingedreht werden. Zuvor werden die Bolzen, die an mindestens einem Ende einem Schlitz aufweisen, durch eine Drehbewegung in die Längsrichtung der Hohlräume gestellt, so dass die Gewindestange längs der Querbohrungen einfach in die Bolzen eingesetzt werden. Das Einführen und Eindrehen der Gewindestange wird durch eine Verjüngung an einem ihrer Enden in Form einer Spitze erleichtert.

Damit bleibt die obere und untere Fläche des Verbundes ohne Störungen und ein oberes bzw. unteres Abschlussprofil kann aufgesetzt werden.

Der Bolzen zum Verbinden der Profilbretter ist an seinen Enden gemäß dem Winkel der Bohrungen gerade und besitzt eine solche Länge, dass er von der hinteren Innenwand des Vierkantprofils in dem ersten Hohlraum bis zur hinteren Innenwand des Vierkantprofils in dem zweiten Hohlraum reicht.

Dabei sind die Gewindelöcher so in dem Bolzen der obersten und untersten Löcher der Reihe positioniert, dass sie sich bündig zu den vorderen Innenwänden der Vierkantprofile befinden. Ebenso sind die Querlöcher so in den Bolzen der mittleren Löcher der Reihe positioniert, dass sie sich auch bündig zu den vorderen Innenwänden der Vierkantprofile befinden. So können sich die beiden Gewindestange beim Eindrehen in die Bolzen an die Innenwände der Vierkantprofile einpressen, wodurch eine saubere Verbindung zwischen den Profilbrettern entsteht, ohne ein Risiko des Verbiegens durch zu hohen Schraubdruck.

Eine Ausführungsform der Erfindung ist beispielhaft in den Figuren dargestellt.
Fig. 1 zeigt einen Klappladen aus einem Verbund von Profilbrettern.
Fig. 2 zeigt eine Draufsicht auf einen Bolzen mit Gewindebohrungen.
Fig. 3 zeigt eine Seitenansicht des Bolzens mit Gewindestange.
Fig. 4 zeigt einen Querschnitt durch die Verbindung von zwei Profilbrettern.
Fig. 5 zeigt einen senkrechten Schnitt durch die Verbindung von zwei Profilbrettern.
Fig. 6 zeigt die Draufsicht auf einen Verbund von Profilbrettern.

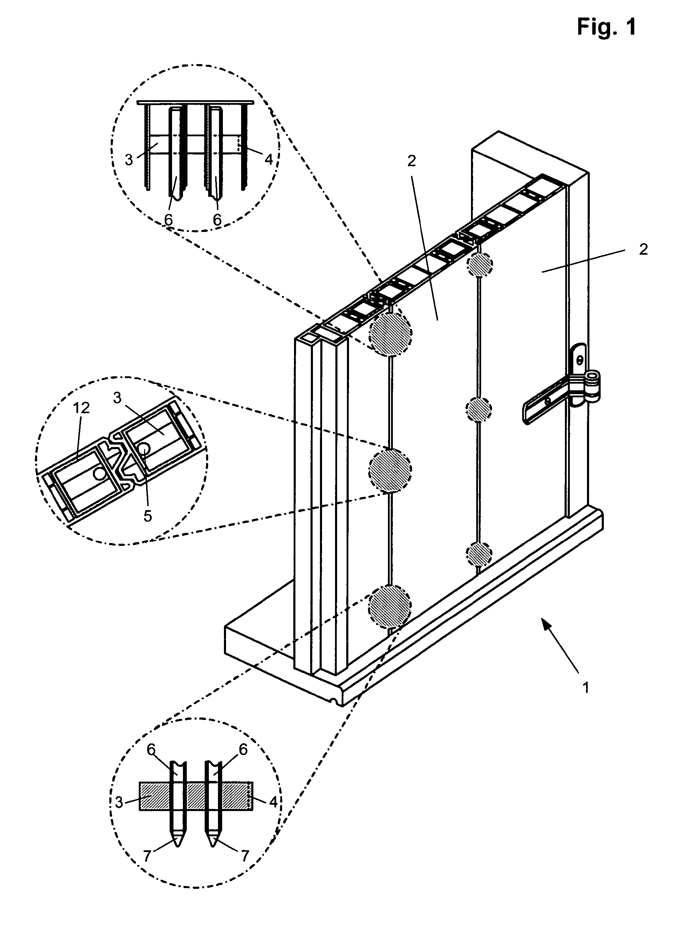

In Fig. 1 ist ein Verbund 1 von mehreren Profilbrettern 2 dargestellt, der einen Klappladen vor einem nicht dargestellten Fenster bildet. Der Klappladen ist schwenkbar angebracht und besitzt an einem Ende eine Abschlussleiste. Bei diesem Verbund 1 sind drei Profilbretter 2 miteinander verbunden.

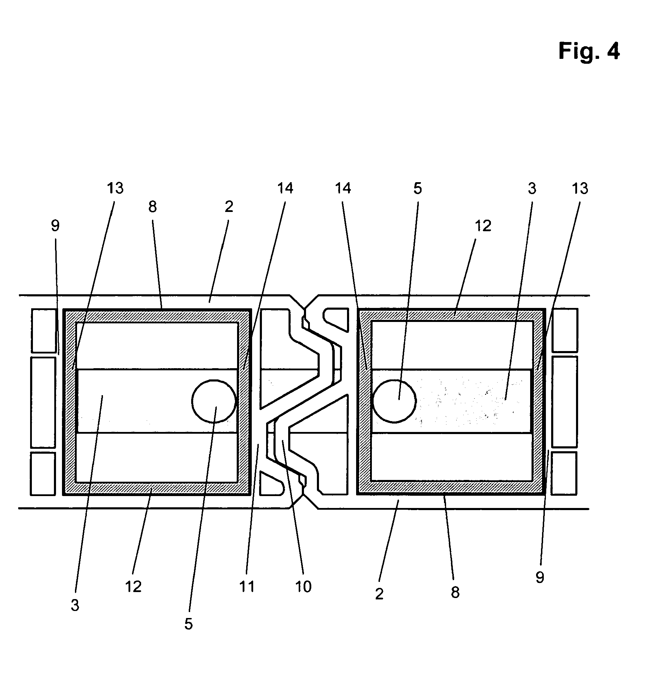

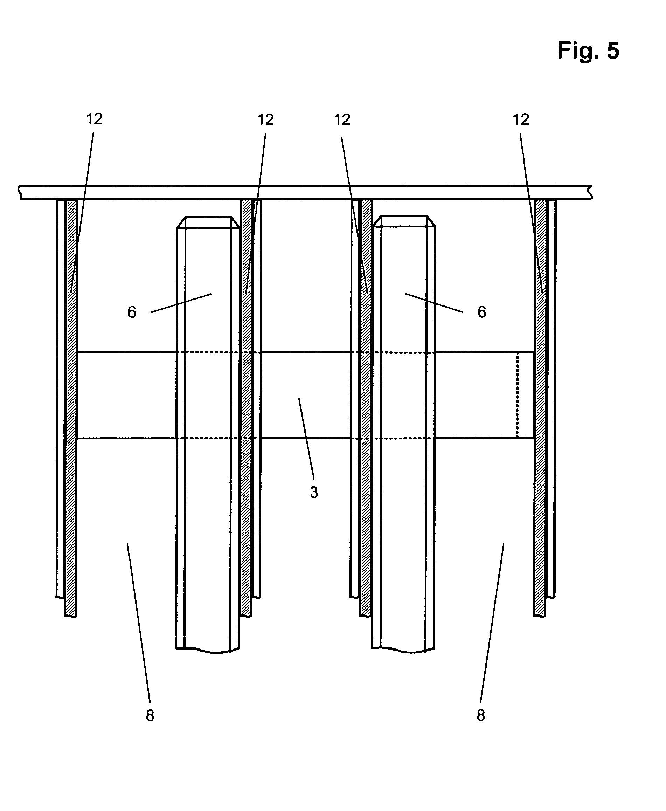

An dem oberen und unteren Ende der Profilbretter 2 sind Bolzen 3 mit jeweils zwei Gewindelöchern in den Hohlräumen untergebracht, durch die die beiden Gewindestangen 6 eingeschraubt werden. Das obere Detail ist in Fig. 5 näher erläutert. In der Mitte der Profilbretter 2 sind Bolzen 3 mit jeweils zwei Querlöchern in den Hohlräumen untergebracht, durch die die Gewindestangen 6 geführt werden, wie es in Fig. 4 näher erläutert ist.

Es wird jeweils eine durchgehende Gewindestange 6 in den beiden Hohlräumen 8 von oben bis unten eingesetzt.

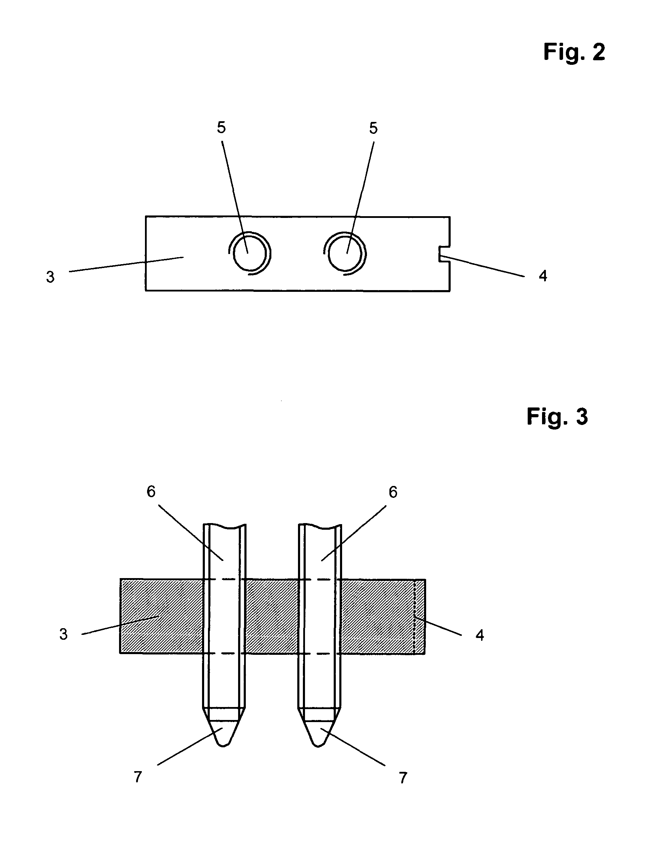

In Fig. 2 ist ein Bolzen 3 mit zwei Querlöchern 5 mit Gewinde in der Draufsicht dargestellt. Der Bolzen 3 besitzt an den Enden einen geraden Abschluss, am rechten Ende weist er zusätzlich einen Schlitz 4 auf, der längs zu den Querlöchern 5 verläuft. Durch Drehen am Schlitz 4 kann der Bolzen 3 so ausgerichtet werden, dass die Querlöcher 5 längs des Hohlraumes liegen.

In Fig. 3 ist der gleiche Bolzen 3 mit zwei, in die Gewindelöcher eingedrehten Gewindestangen 6 in Seitenansicht dargestellt. Die Gewindestangen 6 besitzen am unteren Ende eine Spitze 7, durch die das Einführen und Eindrehen der Gewindestangen 6 in die Querlöcher erleichtert wird.

Fig. 4 zeigt einen Querschnitt durch die Verbindung von zwei Profilbrettern 2, bei denen die Wülste 10 und die Nuten 11 formschlüssig ineinander greifen. Der Bolzen 3 ist durch die Löcher der Seitenkanten und der Vierkantprofile 12 in die Hohlräume 8 eingesteckt. Er erstreckt sich von der hinteren Innenwand 13 des ersten Vierkantprofils bis zur hinteren Innenwand 13 des zweiten Vierkantprofils und durchstößt dabei die Seitenkanten der beiden Profilbretter 2. Die Gewindestangen sind bündig zur vorderen Innenwand 14 der beiden Vierkantprofile durch die Querlöcher 5 eingeschraubt und pressen so die beiden Seitenkanten der Profilbretter 2 aneinander.

Beim Einsatz eines Bolzens 3 in einer mittleren Position entfallen die Gewinde in den Querlöchern.

In Fig. 5 ist der Einsatz der Gewindestangen 6 in den Hohlräumen 8 näher dargestellt. In den Hohlräumen 8 sind Vierkantprofile 12 aus Metall eingesetzt. Der Bolzen 3 ist quer durch die Hohlräume 8 gesteckt und die Gewindestangen 6 darin eingedreht. Dabei pressen sich die Gewindestangen 6 an die Innenwände der Vierkantprofile 12 und pressen damit auch den Bolzen 3 fest. Es ist eine feste und sichere Verbindung entstanden.

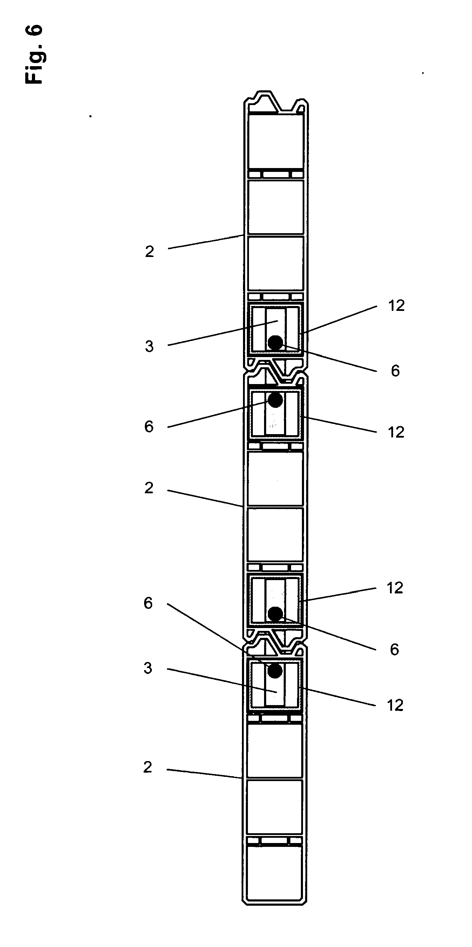

In Fig. 6 ist ein Verbund 1 von drei Profilbrettern 2 gezeigt, die hinter der Nut einen Hohlraum besitzen, in denen ein Vierkantprofil 12 eingesetzt ist. Die Profilbretter 2 passen an ihrer Seitenkante mit den Wülsten und Nuten formschlüssig aneinander und sind über die Bolzen 3 miteinander verbunden. In die Querlöcher der Bolzen 3 sind Gewindestangen 6 eingedreht, die sich an der vorderen Innenwand der Vierkantprofile 12 so einpressen, dass eine stabile Verbindung der Profilbretter 2 aneinander hergestellt wird.

### Bezugszeichenliste

- 1: Verbund von Profilbrettern
- 2: Profilbrett
- 3: Bolzen
- 4: Schlitz
- 5: Querloch
- 6: Gewindestange
- 7: Spitze
- 8: Hohlraum
- 9: Hinterwand
- 10: Wulst
- 11: Nut
- 12: Vierkantprofil
- 13: hintere Innenwand
- 14: vordere Innenwand

## Patentansprüche

1. Verfahren zur Bildung eines Verbundes von Profilbrettern (2) mit einem Wulst (10) und einer Nut (11) an einer Seitenkante, die formschlüssig zueinander passen, und hinter der Nut ein angrenzender rechteckiger Hohlraum (8) mit einer Hinterwand (9) in definierter Tiefe vorhanden ist, in dem ein Profil (12) eingesetzt ist,
**dadurch gekennzeichnet, dass** das Profil ein Vierkantprofil (12) ist, das, von von oben bis unten eingesetzt ist und das eine hintere (13) und vordere Innenwand (14) besitzt
dass unter einem Winkel in die Seitenkante und in die vordere innenwand des Vierkantprofits (12) eine Reihe , Löchern in einem solchen definierten Abstand gebohrt wird, dass die Löcher in zwei aneinander stoßenden Seitenkanten genau übereinander liegen,
dass in die Löcher Bolzen (3) gesteckt werden, die an die hintere Innenwand (13) des Vierkantprofils (12) anstoßen,
dass ein nächstes Profilbrett (2) mit seinen Löchern auf die Bolzen (3) gesteckt wird, dass alle Bolzen Querbohrungen (5) besitzen, in die Befestigungsmittel längs der beiden angrenzenden Hohlräume (8) von oben bis unten eingesetzt werden.

2. Verfahren nach Anspruch 1, **dadurch gekennzeichnet,**
**dass** die Löcher unter einem Winkel von 90° gebohrt werden.

3. Verfahren nach Anspruch 1, **dadurch gekennzeichnet,**
**dass** die Querbohrungen (5) der obersten und untersten Bolzen (3) Gewinde aufweisen und die Befestigungsmittel dazu passende Gewindestangen (6) sind.

4. Verfahren nach Anspruch 1, **dadurch gekennzeichnet,**
**dass** die Bolzen (3) an mindestens einem Ende einen Schlitz (4) aufweisen, an dem die Bolzen durch eine Drehbewegung längs den Querbohrungen (5) geradeaus gestellt werden.

5. Verfahren nach Anspruch 3, **dadurch gekennzeichnet,**
**dass** die Gewindestangen (6) an mindestens einem Ende verjüngt sind.

6. Verfahren nach Anspruch 1, **dadurch gekennzeichnet,**
**dass** die Bolzen (3), die Gewindestangen (6) und die Vierkantprofile (12) aus Metall sind.

## Claims

1. Method for creating a composite from profile boards (2) with a bead (10) and a groove (11) on one lateral edge, which fit together in a form fit, and with an adjacent rectangular cavity (8) behind the groove having a rear wall (9) at a defined depth, in which a profile (12) is inserted, **characterized in that** the profile is a rectangular profile (12) that is inserted from top to bottom and that comprises a rear inner wall (13) and a front inner wall (14),
that a series of holes are drilled at an angle into the lateral edge and into the front inner wall of the rectangular profile (12) at a distance that is defined so that the holes of two abutting lateral edges exactly overlap,
that bolts (3), are inserted into the holes and abut against the rear inner wall (13) of the rectangular profile (12),
that the bolts (3) are inserted into the holes of another profile board (2),
that all bolts have transverse bores (5), into which fastening means are inserted from top to bottom in the longitudinal direction of the two adjacent cavities (8).

2. Method according to claim 1, **characterized in that** the holes are drilled at an angle of 90 degrees.

3. Method according to claim 1, **characterized in that** the transverse bores (5) of the top and bottom bolts (3) have threads and the fixing means are corresponding threaded rods (6).

4. Method according to claim 1, **characterized in that** the bolts (3) have a slot (4) on at least one end, by means of which the bolts are turned so that the transverse bores (5) are vertically aligned.

5. Method according to claim 3, **characterized in that** the threaded rods (6) are tapered on least one end.

6. Method according to claim 1, **characterized in that** the bolts (3), the threaded rods (6) and the rectangular profiles (12) are made of metal.

## Revendications

1. Méthode pour créer un raccord de panneaux profilés (2) avec une languette (10) et une rainure (11) sur un bord latéral, qui concordent dans une liaison mécanique, et avec une cavité rectangulaire adjacente (8) derrière la rainure ayant une paroi arrière (9) dans une profondeur définie, dans laquelle un profilé (12) est inséré, **caractérisé en ce que** le profilé est un profilé rectangulaire (12) qui est inséré de haut en bas et qui comprend une paroi intérieure arrière (13) et une paroi intérieure frontale (14),
qu'une série de trous sont percés à un angle dans le bord latéral et dans la paroi frontale intérieure du profilé rectangulaire (12) à une distance qui est définie de telle sorte que les trous des deux bords latéraux en butée chevauchent exactement, que des boulons (3), sont insérés dans les trous et sont en butée contre la paroi intérieure arrière (13) du profilé rectangulaire (12),
que les boulons (3) sont insérées dans les trous d'un autre panneau profilée (2), que tous les boulons présentent des alésages transversaux (5), dans lesquels des moyens de fixation sont insérés de haut en bas dans la direction longitudinale des deux cavités adjacentes (8).

2. Méthode selon la revendication 1, **caractérisé en ce que** les trous sont percés à un angle de 90 degrés.

3. Méthode selon la revendication 1, **caractérisé en ce que** les alésages transversaux (5) dans les boulons aux deux extrémités (3) comportent des filetages et les moyens de fixation sont des tiges filetées correspondantes (6).

4. Méthode selon la revendication 1, **caractérisé en ce que** les boulons (3) présentent une fente (4) sur au moins une extrémité, au moyen de laquelle les boulons sont tournés de telle sorte que les alésages transversaux (5) sont alignés verticalement.

5. Méthode selon la revendication 3, **caractérisé en ce que** les tiges filetées (6) sont effilées à au moins une extrémité.

6. Méthode selon la revendication 1, **caractérisé en ce que** les boulons (3), les tiges filetées (6) et les profilés rectangulaires (12) sont en métal.
